# EUROPEAN PATENT SPECIFICATION

(11) **EP 2 861 919 B1**
(45) Date of publication and mention of the grant of the patent: **10.04.2019**
(21) Application number: 13784910.5
(22) Date of filing: 29.04.2013
(51) Int. Cl.: C09K 5/04, F25B 43/04

(54) **REFRIGERATION SYSTEM WITH PURGE USING ENRIVONMENTALLY-SUITABLE CHILLER REFRIGERANT**
KÜHLSYSTEM MIT SPÜLUNG ANHAND EINES UMWELTGEEIGNETEN KÜHLERKÄLTEMITTELS
SYSTÈME DE RÉFRIGÉRATION À PURGE UTILISANT UN FLUIDE FRIGORIGÈNE DE REFROIDISSEUR ÉCOLOGIQUE

(30) Priority: 30.04.2012 US 201261640222 P; 21.12.2012 US 201261740724 P; 15.03.2013 US 201313842025
(43) Date of publication of application: 22.04.2015
(73) Proprietor: Trane International Inc., Piscataway, NJ 08855 (US)
(72) Inventor: KUJAK, Stephen, Anthony, Brownsville MN 55919 (US); MAJURIN, Julie, Ann, La Crosse, WI 54601 (US); JANDAL, Daoud, Ali, La Crosse, WI 54601 (US); O'DRISCOLL, William, Onalaska, WI 54650 (US)
(74) Representative: Haseltine Lake LLP
(86) International application number: PCT/US2013/038639
(87) International publication number: WO 2013/165895

(56) References cited:
- JP-A- 2007 315 663
- JP-A- 2010 255 966
- US-A- 4 304 102
- US-A- 5 031 410
- US-A1- 2007 108 403
- US-A1- 2010 123 095
- US-A1- 2010 326 095

## Description

The embodiments disclosed herein relate generally to a refrigeration system with a purge. More particularly, the embodiments relate to a refrigeration system with a purge using an environmentally-suitable chiller refrigerant.

### BACKGROUND

Refrigeration systems such as centrifugal chillers, utilize low pressure chiller refrigerants such as CFC-11, CFC-113, HCFC-123 and multi-pressure refrigerants such as CFC-114 and HFC-245fa to operate at a low pressure, e.g., less than atmospheric pressure, either at all times or under a set of operating or stand-down conditions. Examples of refrigeration systems are described in US 2007/108403, US 5031410 and US 2010/326095.

### SUMMARY

The invention is defined in the attached independent claims to which reference should now be made. Further, optional features may be found in the sub-claims appended thereto. The embodiments described herein are directed to refrigeration systems with a purge. The refrigeration systems employ an environmentally-suitable chiller refrigerant, which is environmentally friendly, safe, and energy-efficient.

Environmental impacts of the chiller refrigerants are a growing concern. For example, from 2011 on, the European Union will phase out refrigerants with a global warming potential (GWP) of more than, for example, 150 in some refrigeration systems. Environmentally-suitable chiller refrigerants, with suitable properties such as density, vapor pressure, heat of vaporization, and suitable chemical properties, which satisfy the requirements regarding safety and environment impacts, such as the European Union Standard discussed above, can be utilized for refrigeration systems with a purge. The environmentally-suitable chiller refrigerants are nonflammable or mildly flammable, non-ozone depleting, energy efficient, low in toxicity, compatible with materials of construction, and are chemically stable over the life of the equipment.

The refrigeration system of the present invention is provided with a purge. The environmentally-suitable chiller refrigerant utilized by the refrigeration system includes a composition including at least one chemical of 1-chloro-3,3,3 trifluoropropene (E), 1-chloro-3,3,3 trifluoropropene (Z), 2-chloro-3,3,3 trifluoropropene, 1,1,dichloro-3,3,3 trifluoropropene, 1,3,3,3 tetrafluoropropene (E), 1,3,3,3 tetrafluoropropene (Z), 1,2 dichloro-3,3,3 trifluoropropene (E), 1,2 dichloro-3,3,3 trifluoropropene (Z), 1,1,3 trichloro-3,3,3 trifluoropropene, 1,2 dichloroethylene (E), 1,2 dichloroethylene (Z), 1,1 dichloroethylene, 1,1,1,4,4,4 hexafluorobutene (Z), 1,1,1,4,4,4 hexafluorobutene (E), Isopentane, and Pentane. The environmentally-suitable chiller refrigerants described herein can satisfy the requirements regarding safety and environment impacts and energy-efficiency.

Environmentally-suitable chiller refrigerants described herein can be more environmentally friendly, energy-efficient, and/or have more applications in refrigeration systems.

The environmentally-suitable chiller refrigerants can be unstable in an atmosphere with atmospheric gases such as, for example, oxygen and/or moisture, which can shorten an atmospheric life of the environmentally-suitable chiller refrigerants. Chillers using the environmentally-suitable chiller refrigerants may include components that operate at less than atmospheric pressure and it is possible for atmospheric gases to leak into the chiller which can lead to a breakdown of the environmentally-suitable chiller refrigerants in the chiller. For example, the environmentally-suitable chiller refrigerants can breakdown in the presence of oxygen, moisture or other atmospheric gases in the chiller, which can reduce an operational life of the chiller and/or decrease the performance of the chiller, e.g., decreasing the energy efficiency.

Purges have been used to expel non-condensables such as, for example, moisture, air and other non-condensables, from refrigerant chillers while minimizing the loss of the environmentally-suitable chiller refrigerant in the process of removing such non-condensables. The purges can be operatively independent of an operation status of the chiller refrigerant.

However, in some embodiments, purges are provided so as to remove refrigerant-harmful gases, especially oxygen, from environmentally-suitable chiller refrigerants in a refrigeration system. The term "refrigerant-harmful gas" is used herein to refer to refrigerant-reactive atmospheric gases that can lead to a breakdown of the chiller refrigerant. The refrigerant-harmful gases include, for example, oxygen, ozone, carbon dioxide, carbon monoxide, hydroxyl radicals, chlorine radicals, nitrous oxides, etc.

Also, in some embodiments, the purge includes a remover to remove refrigerant-harmful gases from the chiller refrigerant. In some embodiments, the remover includes a scrubber.

The refrigeration system includes a compressor, a condenser, an expansion device and an evaporator. The compressor, the condenser, the expansion device and the evaporator are fluidly connected to form a refrigeration circuit. A purge is fluidly connected to the condenser to receive a chiller refrigerant flowing through the refrigeration system from the condenser. The purge is configured to remove non-condensable gases from the chiller refrigerant. The chiller refrigerant includes an environmentally-suitable chiller refrigerant that has a 100 year direct global warming potential (GWP) of less than 150.

In one embodiment, a system for removing undesired materials from a chiller refrigerant received from a refrigeration system includes a purge including an inlet to receive the chiller refrigerant from a condenser of the refrigeration system. The purge is configured to remove one or more non-condensable gases from the chiller refrigerant. The purge may further include an outlet to return the chiller refrigerant to the refrigeration system. A remover may be operatively connected to the purge and configured to remove one or more refrigerant-harmful gases from the chiller refrigerant.

In one embodiment, a method of conducting a refrigeration cycle includes directing an environmentally-suitable chiller refrigerant to a compressor, directing the environmentally-suitable chiller refrigerant from the compressor to a condenser, directing the environmentally-suitable chiller refrigerant from the condenser to a purge, removing one or more non-condensable gases from the chiller refrigerant, directing the environmentally-suitable chiller refrigerant back to the condenser, directing the environmentally-suitable chiller refrigerant from the condenser to an expansion device, directing the environmentally-suitable chiller refrigerant from the expansion device to an evaporator, and directing the environmentally-suitable chiller refrigerant from the evaporator back to the compressor. The compressor, the condenser, the expansion device, the evaporator, and the purge are fluidly connected to form a refrigeration circuit to conduct the refrigeration cycle. The environmentally-suitable chiller refrigerant has a 100 year direct global warming potential (GWP) of less than 150.

In one embodiment, a method of removing undesired materials from a chiller refrigerant of a refrigeration system includes receiving the chiller refrigerant from a condenser of the refrigeration system, removing, via a remover, one or more refrigerant-harmful gases from the chiller refrigerant, removing, via a purge, one or more non-condensable gases from the chiller refrigerant, and directing the chiller refrigerant back to the refrigeration system.

### BRIEF DESCRIPTION OF THE DRAWINGS

Reference is made to the drawings in which like reference numbers represent corresponding parts throughout.
FIG. 1 illustrates a block diagram of an embodiment of a refrigeration system with a purge.
FIG. 2 illustrates a schematic diagram of an embodiment of a purge.
FIG. 3 illustrates a partial cross-sectional view of the purge tank of the purge of FIG. 2, illustrating the components housed in the purge tank.
FIG. 4 schematically illustrates the purge tank of FIG. 3.
FIG. 4A is an enlarged portion of FIG. 4 illustrating the water separation tube inlet area within the purge tank of FIG. 3.
FIG. 4B illustrate an alternative environmentally-suitable chiller refrigerant supply and return arrangement employing a single supply/return conduit as opposed to the separate supply conduit and return conduits illustrated in FIGS. 1-4.
FIGS. 5A, 5B and 5C schematically illustrate the development of an air blanket within the purge tank.
FIG. 6 illustrates a block diagram of an embodiment of a refrigeration system with a purge having a remover.
FIG. 7 illustrates a schematic diagram of an embodiment of a purge with a remover.
FIG. 8 illustrates a schematic view of a dry scrubber.
FIG. 9 illustrates a flow diagram of a method for removing contaminants in environmentally-suitable chiller refrigerants, according to one embodiment.

### DETAILED DESCRIPTION

The embodiments described herein are directed to refrigeration systems with a purge where the refrigeration systems utilize one or more environmentally-suitable chiller refrigerants having a specific composition.

A refrigerant is considered environmentally suitable when it has a 100 year direct global warming potential (GWP) of less than 150 metric tons of carbon dioxide equivalent. GWP is a relative measure of how much heat a greenhouse gas traps in the atmosphere as compared to carbon dioxide as a reference. A GWP is calculated over a specific time interval, commonly 20, 100 or 500 years. GWP is expressed as a factor of carbon dioxide (whose GWP is standardized to 1). The higher GWP potential for a refrigerant results in great potential to contribute to global climate change.

In some embodiments, the purge can include a remover to remove refrigerant-harmful gases from the chiller refrigerant. In some embodiments, the remover can be a unit separate from the purge. In some embodiments, the remover can include a scrubber.

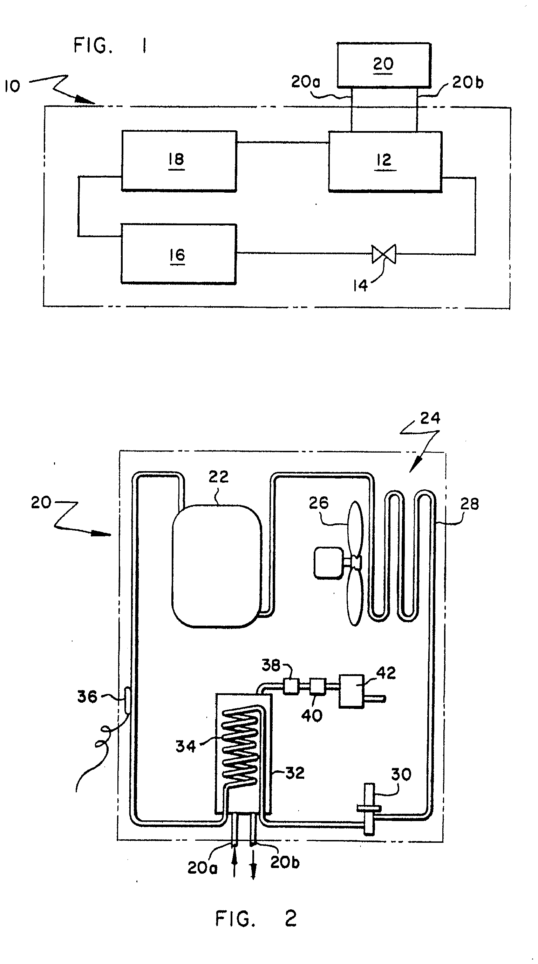

Referring initially to FIGS. 1-5 schematically illustrated is a refrigeration system 10, commonly known as a chiller, which can provide chilled water for use in industrial processes or in the comfort conditioning of building structures. In the embodiment shown in FIG. 1, the chiller 10 is a centrifugal chiller of the packaged type which includes a condenser 12, an expansion device 14, an evaporator 16 and a compressor 18. The condenser 12, the expansion device 14, the evaporator 16 and the compressor 18 are all serially connected to form a hermetically sealed closed-loop chiller refrigeration circuit.

The composition of the environmentally-suitable chiller refrigerant employed by the chiller 10 can include at least one of:
1-chloro-3,3,3 trifluoropropene (E), 1-chloro-3,3,3 trifluoropropene (Z), 2-chloro-3,3,3 trifluoropropene, 1,1,dichloro-3,3,3 trifluoropropene, 1,3,3,3 tetrafluoropropene (E), 1,3,3,3 tetrafluoropropene (Z), 1,2 dichloro-3,3,3 trifluoropropene (E), 1,2 dichloro-3,3,3 trifluoropropene (Z), 1,1,3 trichloro-3,3,3 trifluoropropene, 1,2 dichloroethylene (E), 1,2 dichloroethylene (Z), 1,1 dichloroethylene, 1,1,1,4,4,4 hexafluorobutene (Z), 1,1,1,4,4,4 hexafluorobutene (E), Isopentane, and Pentane.

It will be appreciated that the composition of the environmentally-suitable chiller refrigerant can include any combinations of the above chemicals. It is to be understood that any of the environmentally-suitable chiller refrigerants can be used in combination with one or more less environmentally suitable refrigerants to form a mixture of refrigerants that has an acceptable environment property.

The amount of the above listed chemicals in the environmentally-suitable chiller refrigerant can be in a range of, for example, 40% to 100% by weight.

The composition of the environmentally-suitable chiller refrigerant can include other components, including, for example, lubricant, compatibilizer, stabilizers, surfactants, inhibitors, and solubilizing agents.

The environmentally-suitable chiller refrigerant may be a low pressure refrigerant. A low pressure refrigerant is a compound or mixture that has a vapor pressure less than, for example, about 14.7 pounds per square inch absolute (psia) at about -18°C (about 0° F). Because certain components, including the evaporator 16 and, under certain conditions, the condenser 12 of the chiller 10, may operate at lower than atmospheric pressure, it is possible for non-condensables such as air and moisture to leak into the chiller. These non-condensable elements make their way to and become trapped in the condenser 12 with the result that the condensing pressure and compressor power requirements increase thereby reducing chiller efficiency and cooling capacity. It will be appreciated the environmentally-suitable chiller refrigerant can be medium pressure refrigerants, and the chiller 10 can operate at or above the atmospheric pressure.

In order to remove such non-condensables from the environmentally-suitable chiller refrigerant, a purge 20 is employed with the chiller 10. As will be more fully described, the purge 20 is connected in a free-flow circulatory relationship with the condenser 12 of the chiller 10 by supply and return lines 20a and 20b, both of which open into a vapor space within the condenser 12.

In the embodiment shown in FIG. 2, the purge 20 can include an entirely separate and discrete hermetic refrigeration circuit which may employ a refrigerant different than the environmentally-suitable chiller refrigerant. For example, the refrigerant used in purge 20 can be a relatively high pressure refrigerant compared to the environmentally-suitable chiller refrigerant such as, for example, the refrigerant referred to as R-404A. In another embodiment, the purge 20 can include one or more of the environmentally-suitable chiller refrigerants, or a mixture of one or more environmentally-suitable chiller refrigerants and one or more less environmentally suitable chiller refrigerants. It will be appreciated that the refrigerant used in the purge 20 can be any suitable refrigerant that can create a lower evaporative temperature than the chiller refrigerant.

The purge 20 includes a refrigerant compressor 22 which is a component of a purge condensing unit 24. The condensing unit 24 also includes a fan 26 and a heat exchanger coil 28 to which the compressor 22 discharges hot compressed purge refrigerant gas when the purge 20 is in operation.

The fan 26, when operating, causes ambient air to move through the coil 28 in a heat exchange relationship with the purge refrigerant passing from the compressor 22 to and through the coil 28. It will be noted that while an air-cooled purge condensing unit can be used, as it avoids the need to "hook-up" to a different cooling source such as water, condensing unit 24 could be cooled by an alternate cooling source.

The condensed purge refrigerant next leaves the coil 28 and passes to and through an expansion device 30. The expansion device 30, which functions as a suction pressure regulator, reduces the temperature of the purge refrigerant to, for example, approximately 0°F and maintains it there by regulating the pressure of the purge refrigerant to a target pressure.

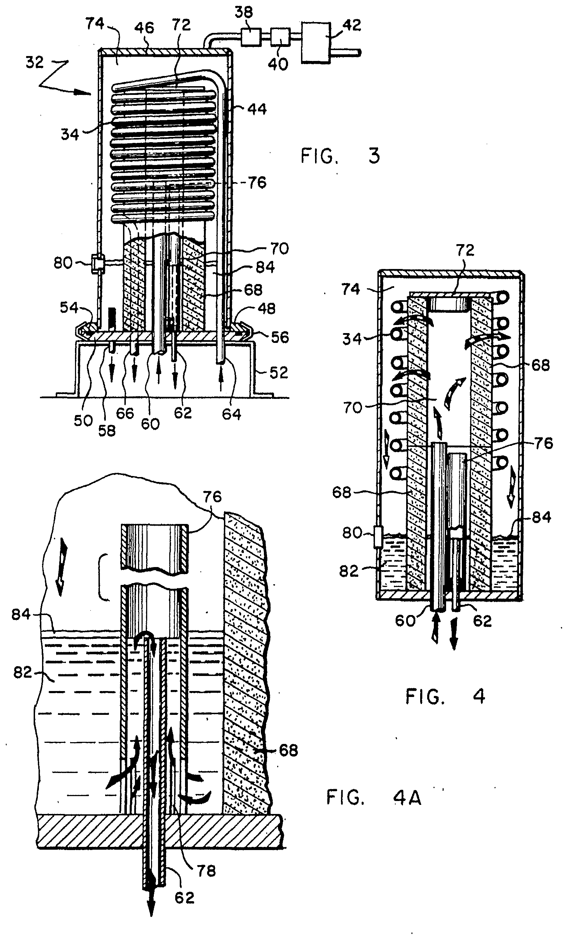

The purge refrigerant next enters purge tank 32 which houses a purge cooling coil 34, through a purge coil inlet 64 (see Fig. 3). As will be further explained, the purge cooling coil 34 functions as an evaporator in the purge refrigeration circuit, by placing the relatively cold purge refrigerant flowing therethrough into a heat exchange relationship with the relatively warm environmentally-suitable chiller refrigerant vapor which is drawn into the purge tank 32. By the condensing of the environmentally-suitable chiller refrigerant on the purge cooling coil 34, the removal of non-condensables from the environmentally-suitable chiller refrigerant is accomplished internal of the purge tank.

After passing through the cooling coil 34 and being vaporized in a heat exchange-relationship with the environmentally-suitable chiller refrigerant in the purge tank 32, the purge refrigerant flows out of the purge tank 32 through a purge coil outlet 66 (see Fig. 3) and back to the compressor 22. As will also be further explained, the temperature of the purge refrigerant gas passing from the coil 34 back to the compressor 22 is sensed by a control switch 36 and is used in controlling the operation of the purge 20 and the removal of air from the purge tank 32.

FIG. 2 also illustrates the components of the pump-out portion of the purge 20. The pump-out portion of the purge 20 functions to remove air from the purge tank 32 and includes a solenoid valve 38, a flow restrictor 40, such as a porous metal plug or capillary tube, and a pump-out compressor 42. The function and operation of the pump-out portion will be discussed further below.

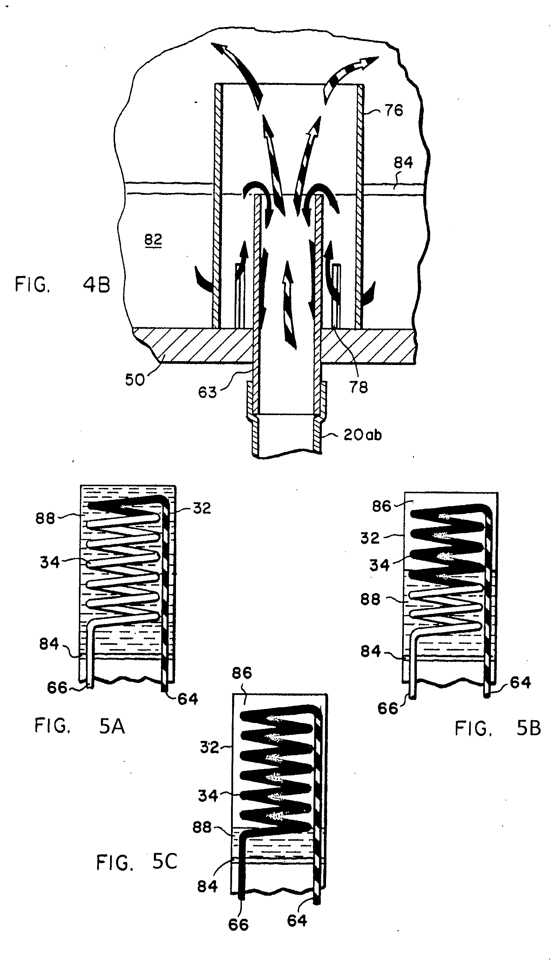

Referring primarily now to FIGS. 3, 4 and 4A, the purge tank 32 includes a cylindrical housing 44 closed at a first end by a top plate 46. A mounting flange 48 is disposed at the bottom of the purge tank 32 for cooperative attachment to a base plate 50 which is mounted on a mounting frame 52. The purge 20 can be mounted directly on or proximate to the chiller 10.

An O-ring or gasket 54 is disposed between the flange 48 and the base plate 50 to create a seal therebetween. The O-ring or gasket 54 is compressed between the flange 48 and the plate 50 by the disposition and tightening of a V-band clamp 56 therearound with the result being that the interior of the purge tank 32 is a volume which is closed off and sealed from the ambient. Opening into the interior of the purge tank 32 is a tank drain 58 through which liquid within the purge tank 32 can be periodically drained to allow for water removal and access to the components interior of the purge tank 32 for purposes of servicing those components.

The environmentally-suitable chiller refrigerant circulates from a vapor space in the chiller condenser 12 through the supply line 20a and into the purge tank 32 through an open-ended environmentally-suitable chiller refrigerant vapor supply conduit 60. As earlier noted, the environmentally-suitable chiller refrigerant entering the purge tank 32 through the open end of the supply conduit 60 undergoes a heat exchange relationship with the purge refrigerant flowing through the purge cooling coil 34. As a result of this heat exchange process, the environmentally-suitable chiller refrigerant condenses and falls, in the liquid state, to the bottom of the purge tank 32. The environmentally-suitable chiller refrigerant overflows into and is directed back to the condenser 12 of the chiller 10 through the open upper end of an environmentally-suitable chiller refrigerant liquid return conduit 62 which connects to the return line 20b. As is indicated above, the return line 20b likewise opens into a vapor space in the chiller condenser 12.

It will be noted that the purge tank 32 and the chiller condenser 12 are connected by open ended supply and return conduit, i.e. the supply line 20a which connects to the open-ended inlet 60 in the purge tank 32 and the open-ended liquid return conduit 62 which connects to the return line 20b. In some embodiments, there is no need for a mechanical mechanism for restriction to or assistance in the circulation of the environmentally-suitable chiller refrigerant from, to, through, or out of the purge tank 32.

The operation of the purge 20 relies on the thermal and pressure gradients between the purge tank 32 and the chiller condenser 12 which develop as a result of the heat exchange process which occurs in the purge tank 32. These gradients cause the natural circulation in a convection-like process, of the environmentally-suitable chiller refrigerant into, through and out of the purge tank 32.

Mounted within the purge tank 32 are drier cores 68. The drier cores 68, which are commercially available porous moisture absorbing members, are generally cylindrical in nature, and internally define a generally cylindrical volume 70. The cylindrical volume 70 is closed at its upper end by a top plate 72. The drier cores 68 and the top plate 72 cooperate to define generally discrete volumes within the purge tank 32 which can be generally characterized as the first volume 70 interior of the drier cores 68 and a second volume 74 exterior thereof.

Extending upward from the bottom of the purge tank 32 is a water separation tube 76 which, as is best illustrated in FIG. 4A, defines openings 78 in its lower portion. As will further be described, a pool of liquid environmentally-suitable chiller refrigerant 82 can normally be found at the bottom of the purge tank 32, below the lower end of the cooling coil 34. A sightglass 80 is disposed in the sidewall of the purge tank 32 at a level which coincides with the height to which the open-ended environmentally-suitable chiller refrigerant liquid return conduit 62 extends upward into the interior of the purge tank. It will be noted that the return conduit 62 extends upward and opens into the interior of the water separation tube 76 within the purge tank 32.

FIG. 4B illustrates an alternative embodiment wherein the individual environmentally-suitable chiller refrigerant supply conduit 60 and the individual environmentally-suitable chiller refrigerant return conduit 62 are replaced by a single environmentally-suitable chiller refrigerant supply/return conduit 63 and in which the supply and return lines 20a and 20b are likewise replaced by a single supply/return conduit 20ab. In this embodiment environmentally-suitable chiller refrigerant vapor is conducted into the purge tank 32 through the conduit 63 and is returned to the chiller condenser 12, in a liquid state, through the conduit 63 by overflowing and running down the interior side wall of the conduit 63 even as the environmentally-suitable chiller refrigerant vapor circulates into the purge tank 32 through the supply/return conduit 63.

Because the liquid level interior of the purge tank 32 cannot exceed the sightglass level, due to the fact that excess liquid refrigerant can overflow into the liquid return conduit 62 (or 63) and can flow back to the chiller condenser 12, a view of the liquid at the sightglass level can indicate the existence of any water floating on top of the pool of the liquid environmentally-suitable chiller refrigerant 82 which exists within the purge tank 32. The existence of a layer of water indicates the saturation of the drier cores 68 and the need to replace them.

Referring concurrently now to all of the drawing figures, it will be appreciated that the vapor of the environmentally-suitable chiller refrigerant, which can, to varying degrees, carry with it water vapor, air and other non-condensables, can be drawn into the purge tank 32 through the supply conduit 60 which opens into the interior of the purge tank 32 above the liquid (e.g., the sightglass 80) level therein. The environmentally-suitable chiller refrigerant flows into the volume 70 which is defined by the top plate 72, the drier cores 68 and the surface of the pool of condensed refrigerant 82 found at the bottom of the purge tank.

The environmentally-suitable chiller refrigerant, together with the non-condensables it carries into the purge tank 32, diffuses through the drier cores 68 which serve to remove moisture from the environmentally-suitable chiller refrigerant. The environmentally-suitable chiller refrigerant and remaining water vapor then condenses on the surface of the purge coil 34 and falls to the bottom of purge tank 32. Air, being a non-condensable, is displaced upward to the top of the purge tank 32. The volume 70, which is defined interior of drier cores 68 and under top plate 72, can be physically isolated from the portion of the purge tank 32 where separated air is found.

If moisture is present in the liquid at the bottom of the purge tank 32, the portion of drier core 68 disposed in the liquid at the bottom of the purge tank 32 can function to remove the remaining moisture until such time as the drier cores become saturated. When the drier cores 68 become saturated moisture can form as a liquid water layer on top of the condensed liquid environmentally-suitable chiller refrigerant 82 found at the bottom of the purge tank 32. This water layer can be apparent as a distinct liquid layer when viewed through the sightglass 80. Water which pools on top of the condensed environmentally-suitable chiller refrigerant 82 can be prevented from returning to the chiller condenser 12 by the water separation tube 76 which extends upward into the volume 70 interior of the purge tank 32 to an elevation above the water layer in the pooled liquid environmentally-suitable chiller refrigerant 82.

As has been noted, the open-ended chiller liquid refrigerant return conduit 62, which likewise extends upward into the volume 70, opens into the interior of the water separation tube 76. The water separation tube 76 defines the openings 78 at its bottom so that liquid pooled at the very bottom of the purge tank 32 is admitted into the interior of the water separation tube 76. Because liquid environmentally-suitable chiller refrigerant can be found at the location of the openings 78 of the water separation tube 76 within the purge tank 32, liquid environmentally-suitable chiller refrigerant enters the water separation tube 76 and is returned, through the return conduit 62, to the chiller condenser 12. Liquid water can be maintained exterior of the water separation tube 76 on top of the pooled environmentally-suitable chiller refrigerant 82 and can be isolated from the open end of the return conduit 62 by the water separation tube 76.

As has been indicated, the purpose of the purge 20 is to remove air, water and other non-condensables from the chiller 10. Referring primarily now to FIGS. 2, 5A, 5B, and 5C, it will be appreciated that when there is little or no air 86 interior of the purge tank 32, the purge coil 34 can be blanketed with the environmentally-suitable chiller refrigerant vapor 88. The purge coil 34 is sized such that when no air is present in the purge tank 32, the surface area of the coil 34 exposed to the environmentally-suitable chiller refrigerant vapor 88 in the purge tank 32 exceeds that which is required to produce a suction superheat in the purge refrigerant circulating through the purge cooling coil given the operating parameters and characteristics of the expansion device 30. Therefore, when no air is present in the purge tank 32, highly superheated purge refrigerant gas is returned to the purge condenser 28 by way of the purge cooling coil 34 and the compressor 22.

The purge 20 is operational when the compressor 22 and the condensing unit 24 are energized. While the condensing unit 24, which is cooled by ambient air, operates effectively over an ambient temperature range of, for example, from about 4°C to about 60°C (about 40° F to about 140° F), as ambient temperatures increase, the capacity of the purge condensing unit 24 decreases thereby reducing the rate at which the purge 20 can remove air from the purge refrigerant. Assuming "normal" operational conditions of no air in the purge tank 32 and a 21°C (70° F) ambient air temperature, hot, compressed purge refrigerant gas is discharged from the compressor 22 and is directed to the heat exchanger 28.

The condensing unit fan 26 directs air, for example, the 21°C (70° F) ambient air, through the heat exchanger 28 of the condensing unit 24 in a heat exchange relationship with the purge refrigerant. The purge refrigerant exits the purge condensing unit 24 at a temperature of approximately 27°C (80° F) and is directed to the expansion device 30 which functions as a suction pressure regulating device within the purge 20.

The expansion device 30 regulates the pressure of the purge refrigerant to maintain an essentially constant pressure, on the order of, for example, about 6 to about 9 pounds per square inch gauge (psig), and constant temperature, on the order of, for example, -18 to -21°C (0 to -5° F), in the purge refrigerant at the inlet 64 to purge coil 34. The environmentally-suitable chiller refrigerant vapor within the purge tank 32 condenses on the surface of the purge coil 34 and falls to the bottom of the purge tank 32. The condensing of the environmentally-suitable chiller refrigerant within the purge tank 32 creates pressure gradients between the purge tank 32 and the chiller condenser 12 thereby causing more environmentally-suitable chiller refrigerant vapor, carrying non-condensables and water vapor from the chiller condenser 12 to be drawn into the purge tank 32 even as the condensed environmentally-suitable chiller refrigerant overflows and back to the chiller condenser 12.

When there is no air in the purge tank 32, the purge refrigerant returning to the purge compressor 22 from the purge cooling coil 34 is at a high superheat level which corresponds to the saturation temperature in the chiller condenser 12. When the chiller 10 is operating in a powered cooling mode, this temperature is on the order of, for example, 27°-43°C (80°-110° F). In the free cooling mode it can be as low as, for example, 4°C (40° F). During a heat recovery mode of chiller operation, the saturation temperature can exceed, for example, 43°C (110° F).

The high superheat level of the purge refrigerant can be sensed by the temperature control switch 36. As air accumulates in the purge tank 32, displacing environmentally-suitable chiller refrigerant vapor within the purge tank 32, the effective purge coil surface exposed to the environmentally-suitable chiller refrigerant decreases due to the much less favorable heat exchange characteristics of the air as compared to those of the environmentally-suitable chiller refrigerant. As a result, the available superheat to the purge refrigerant is reduced as is the temperature of the purge refrigerant which is directed back to the purge compressor 22.

As is schematically illustrated in FIGS. 5A, 5B and 5C, as air is separated from the environmentally-suitable chiller refrigerant vapor 88, above the liquid level 84 within the purge tank 32, more and more air blankets the outside coil surface of the purge coil 34 starting at the top of the coil 34 and moving downward through the purge tank 32. Since heat transfer from the purge refrigerant to the surrounding air is much less effective than that which occurs between the purge refrigerant and the environmentally-suitable chiller refrigerant in the purge tank 32, progressively less and less surface of the purge coil 34 is available to superheat the purge refrigerant flowing through the purge coil 34.

When the purge tank 32 fills with air to the extent that essentially none of the purge coil 34 is exposed to the environmentally-suitable chiller refrigerant, little or no superheating of the purge refrigerant within the coil 34 can occur. As a result, the temperature of the purge refrigerant as it enters the purge coil 34 through the purge coil inlet 64, for example -18 to -21°C (0 to -5° F), and as it exits the purge coil through the return 66 for return to the compressor 22 can be essentially unchanged when the purge coil 34 is blanketed by air.

As is indicated in FIG. 2, the temperature of the purge refrigerant returning from the purge coil 34 to the compressor 22 is sensed by the temperature control switch 36 downstream of the purge coil outlet 66 (see Figs. 5A-C). When the temperature of the purge refrigerant returning to the compressor 22 from the purge coil 34 drops to a predetermined level, such as for example approximately -7°C (20° F) as sensed by the temperature control switch 36, a signal is generated by the temperature control switch 36 which is used to energize the solenoid 38 and pump-out compressor 42 which causes the evacuation of air from purge tank 32 through a pump-out process.

As the air is removed from the purge tank 32 in a pump-out process, the purge coil 34 is exposed to more and more environmentally-suitable chiller refrigerant vapor which in turn causes the temperature of the purge refrigerant being returned to the purge compressor 22 to increase. The temperature control switch 36 senses the increased temperature of the purge refrigerant and, when the temperature of the purge refrigerant increases to a predetermined level indicating the removal of the air blanketing the purge coil 34 through the pump-out process signals for the closing of the solenoid 38 and deenergization of the pump-out compressor 42.

The solenoid 38 is used to seal the purge tank 32 when the pump-out portion is not activated and must seal the tank 32 from a vacuum condition up to for example approximately 25 psig. The capillary tube or porous metal plug 40 is used to slow the venting action of the pump-out portion. The controlled evacuation of air from the purge tank 32 gives the temperature control switch 36 time to more accurately track the changing heat transfer conditions inside the purge tank 32. The frequency of the occurrence of the purge tank 32 evacuation may also indicate the existence of an air leak into the chiller 10.

A timer control (not shown) may be added to the system which provides a means to override the pump-out portion controls. Under most conditions the purge tank pump-out lasts, for example, approximately 30 seconds. An override timer would close the solenoid 38 and shutdown the pump-out compressor 42 at a predetermined elapsed time should the pump-out compressor 42 or the temperature control switch 36 fail or if a large air leak developed within the chiller 10.

Because the purge 20 can employ an air-cooled condensing unit and can be a discrete hermetically sealed refrigeration circuit, it is capable of operation and of the purging of air from the environmentally-suitable chiller refrigerant whether the chiller 10 is running or not and that no additional cooling source, such as water, is required. The purge 20 is also a departure from those purges which employ environmentally-suitable chiller refrigerant from a location within the chiller, other than a chiller condenser, in a heat exchange relationship with environmentally-suitable chiller refrigerant vapor from the condenser, to purge non-condensables from the environmentally-suitable chiller refrigerant vapor. Such systems typically require that the chiller be in operation in order for the purge to function. The concept of a purge is further described in US 5031410.

It will be appreciated that the purge described herein is an illustration of one embodiment. Other suitable purges can be used for refrigeration systems utilizing the environmentally-suitable chiller refrigerant described herein.

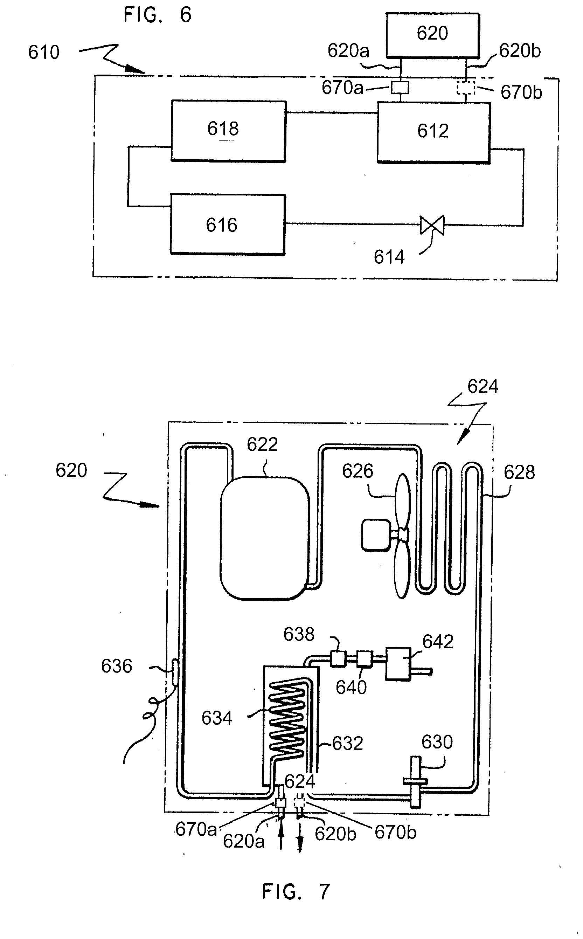

Referring to FIGS. 6-7, embodiments of a refrigeration system or a chiller 610 that includes a remover 670a, are provided. In the embodiment shown in FIG. 6, the chiller 610 is a centrifugal chiller of the packaged type which includes a condenser 612, an expansion device 614, an evaporator 616 and a compressor 618. The condenser 612, the expansion device 614, the evaporator 616 and the compressor 618 are all serially connected to form a hermetically sealed closed-loop chiller refrigeration circuit.

A purge 620 is employed with the chiller 610 to remove contaminants from the environmentally-suitable chiller refrigerant. The purge 620 is connected in a free-flow circulatory relationship with the condenser 612 of the chiller 610 by supply and return lines 620a and 620b, both of which open into a vapor space within the condenser 612.

Similar to the purge 20, the purge 620 includes a refrigerant compressor 622 which is a component of a purge condensing unit 624. The condensing unit 624 also includes a fan 626 and a heat exchanger coil 628 to which the compressor 622 discharges hot compressed purge refrigerant gas when the purge 620 is in operation. The condensed purge refrigerant next leaves the coil 628 and passes to and through an expansion device 630. The purge refrigerant next enters purge tank 632 which houses a purge cooling coil 634. A pump-out portion of the purge 620 includes a solenoid valve 638, a flow restrictor 640, such as a porous metal plug or capillary tube, and a pump-out compressor 642, and functions to remove air from the purge tank 632.

Optionally, the purge 620 can include a separation device for separating non-condensable gases from condensable environmentally-suitable chiller refrigerant gases. The concept of a separation device is described, for example, in US Patent No. 6,564,564.

Optionally, the purge 620 can include an acid filter that is configured to remove acid from the environmentally-suitable chiller refrigerant. The concept of an acid filter is described, for example, in a copending US provisional patent application No.61/640193.

The embodiments described herein use an environmentally-suitable chiller refrigerant. It is appreciated that the embodiments described herein can be used for a chiller refrigerant other than the environmentally-suitable chiller refrigerant.

The refrigeration system 610 further includes the remover 670a for targeting and removing refrigerant-harmful gases from the environmentally-suitable chiller refrigerant. As shown in Figs. 6-7, the remover 670a is located at the supply line 620a for removing refrigerant-harmful gases from the refrigerant drawn from the condenser 612. Optionally, a remover 670b can also be located at the return line 620b for removing refrigerant-harmful gases from the refrigerant directed back to the condenser 612.

The refrigerant-harmful gases can include, for example, oxygen, ozone, carbon dioxide, carbon monoxide, hydroxyl radicals, chlorine radicals, hydrochloric acid, hydrofluoric acid, fluorine radicals, and/or nitrous oxides.

As shown in Figs. 6-7, the remover 670a is operatively connected to the purge 620. In Fig. 7, the remover 670a can be disposed inside the purge 620 as a component of the purge 620.

Optionally, in some embodiments, the remover can be located outside the purge. Optionally, in some embodiments, the remover can be embedded into one or more components of the purge. Optionally, in some embodiments, the remover can be a separate unit from the purge.

In some embodiments, the remover can be a replaceable unit that is convenient for servicing. For example, in some embodiments, the remover can be removed from the purge or the refrigeration system and can be disposable in an environmentally friendly manner. A new remover can be inserted into the purge or the refrigeration system to replace the old one.

In some embodiments, the remover can include a scrubber. The scrubber can be a dry scrubber that can use, for example, via a bubble, or through a solid so that the refrigerant-harmful gases can be absorbed, adsorbed, transformed into other non-harmful species, or chemically neutralized, and removed from the chiller refrigerant.

In some embodiments, the remover can include a wet scrubber that uses a liquid spray or bubble through a liquid so that the refrigerant-harmful gases can be absorbed, adsorbed, transformed into other non-harmful species, or chemically neutralized, and removed from the chiller refrigerant.

In some embodiments, the remover can include an effective scrubber material that is relatively more reactive with the refrigerant-harmful gases than with the environmentally-suitable chiller refrigerant. The effective scrubber material can include, for example, platinum, palladium or other noble metal, a sodium sulfite (Na₂SO₃) material, a hydrazine (N₂H₄) material, a quinone material, a cobalt salt, a lithium salt, a powder metal of iron and/or other oxygen reactive metal(s), activated aluminum oxide, a combination of any of the above materials, etc.

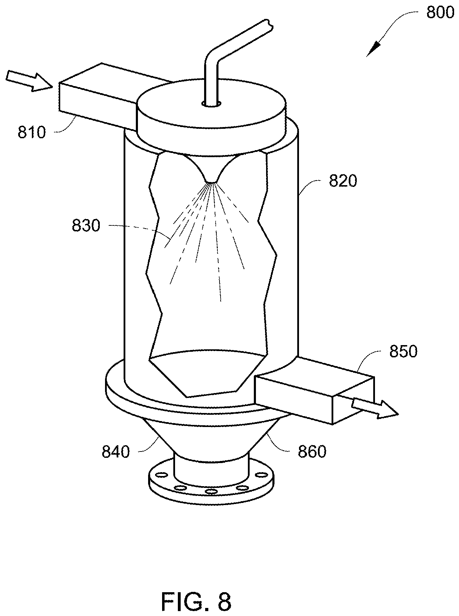

Figure 8 illustrates one embodiment of a scrubber 800 that includes an inlet 810, a chamber 820, a particulate control device 860 and an outlet 850. A chiller refrigerant can be directed into the chamber 820 via the inlet 810 where a slurry of the effective scrubber material 830 is sprayed into the chamber 820. The effective scrubber material 830 can absorb and react with refrigerant-harmful gases to form non-harmful species 840. The non-harmful species 840 can be collected or filtered by the particulate control device 860. In some embodiments, the particulate control device can include, for example, a filter or a precipitator. The chiller refrigerant, free from the refrigerant-harmful gases, can be directed out of the scrubber 800 via an outlet 850. In another embodiment, the scrubber 800 can include a stationary solid material that can react with refrigerant-harmful gases. It is to be understood that the scrubber 800 can be a dry scrubber or a wet scrubber.

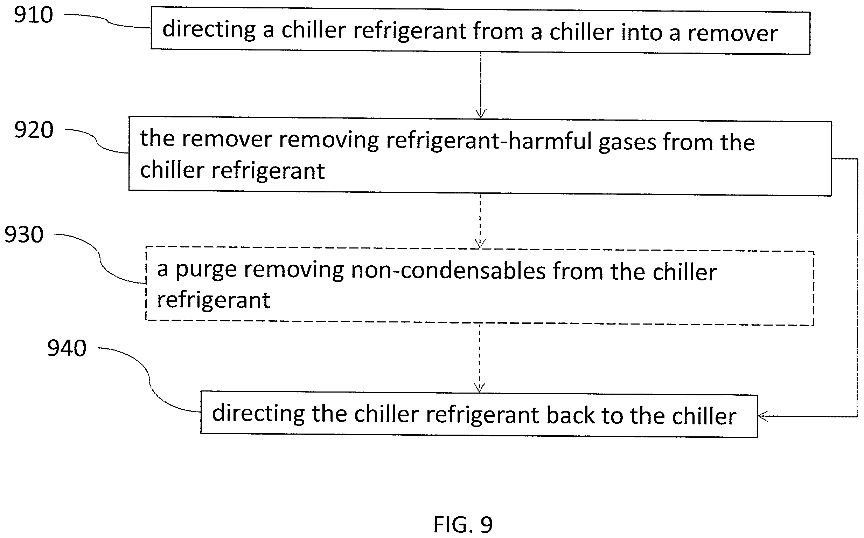

Figure 9 illustrates a block diagram of a method 900 for removing contaminants from a chiller refrigerant, according to one embodiment. At 910, a chiller refrigerant that includes refrigerant-harmful gases and/or other condensables can be drawn from a chiller, for example, from the condenser 612 of the chiller 610, into a remover, for example, the remover 670a that is located at the supply line 620a. The method 900 then proceeds to 920.

At 920, the refrigerant-harmful gases are removed from the chiller refrigerant by the remover. For example, in some embodiments, the refrigerant-harmful gases can be removed from the chiller refrigerant by the remover 670a or 670b. The method 900 then proceeds to 940.

Optionally, in some embodiments, after the refrigerant-harmful gases are removed from the chiller refrigerant by the remover, the method 900 can proceed to 930. At 930, the chiller refrigerant, free from the refrigerant-harmful gases, can be drawn into a purge tank, such as the purge tank 632 shown in Fig. 7, to remove the rest of non-condensables from the chiller refrigerant. The method 900 then proceeds to 940.

At 940, the chiller refrigerant is directed back to the condenser 612 of the chiller 610 through a return line, such as the return line 620b.

## Claims

1. A refrigeration system, comprising:
a compressor (20, 620);
a condenser (12, 612);
an expansion device (14, 614);
an evaporator (16, 616);
the compressor (20, 620), the condenser (12, 612), the expansion device (14, 614), and the evaporator (16, 616) are fluidly connected to form a refrigeration circuit; and
a purge (20, 620) fluidly connected to the condenser (12, 612) to receive a chiller refrigerant flowing through the refrigeration system from the condenser (12, 612), the purge (20, 620) configured to remove non-condensable gases from the chiller refrigerant, and the chiller refrigerant including an environmentally-suitable chiller refrigerant that has a 100 year direct global warming potential (GWP) of less than 150,
wherein the environmentally-suitable chiller refrigerant has a composition comprising:
at least one chemical of 1-chloro-3,3,3 trifluoropropene (E), 1-chloro-3,3,3 trifluoropropene (Z), 2-chloro-3,3,3 trifluoropropene, 1,1,dichloro-3,3,3 trifluoropropene, 1,3,3,3 tetrafluoropropene (E), 1,3,3,3 tetrafluoropropene (Z), 1,2 dichloro-3,3,3 trifluoropropene (E), 1,2 dichloro-3,3,3 trifluoropropene (Z), 1,1,3 trichloro-3,3,3 trifluoropropene, 1,2 dichloroethylene (E), 1,2 dichloroethylene (Z), 1,1 dichloroethylene, 1,1,1,4,4,4 hexafluorobutene (Z), 1,1,1,4,4,4 hexafluorobutene (E), Isopentane, and Pentane, and
wherein the amount of the chemical in the environmentally-suitable chiller refrigerant is in a range of about 40% to about 100% by weight.

2. The refrigeration system of claim 1, wherein the chiller refrigerant further comprises at least one of a lubricant, a compatibilizer, a stabilizer, a surfactant, an inhibitor, and a solubilizing agent.

3. The refrigeration system of claim 1, wherein the purge uses a purge refrigerant capable of creating a relatively lower evaporative temperature than the environmentally-suitable chiller refrigerant.

4. The system of claim 1, further comprising a remover (670a, 670b) operatively connected to the purge (620), the remover configured to remove one or more refrigerant-harmful gases from the chiller refrigerant.

5. The system of claim 4, wherein the remover includes a scrubber (800).

6. The system of claim 5, wherein the remover includes at least one of a dry scrubber and a wet scrubber.

7. The system of claim 4, wherein the remover includes one or more scrubber materials (830) that are relatively more reactive with the refrigerant-harmful gases than with the chiller refrigerant.

8. The system of claim 7, wherein the scrubber materials include at least one of:
a noble metal, a sodium sulfite (Na₂SO3) material, a hydrazine (N₂H₄) material, a quinone material, a cobalt salt, a lithium salt, an oxygen reactive metal, and activated aluminum oxide.

9. The system of claim 4, wherein the refrigerant-harmful gases include at least one of oxygen, ozone, carbon dioxide, carbon monoxide, a hydroxyl radical, a chlorine radical, and a nitrous oxide.

10. The system of claim 4, wherein the inlet of the purge (20, 620) is fluidly connected to a supply line (20a, 620a) and the outlet of the purge is fluidly connected to a return line (20b, 620b), and the remover (670a, 607b) is located on at least one of the supply line (620a) and the return line (620b).

11. A method of conducting a refrigeration cycle, comprising:
directing an environmentally-suitable chiller refrigerant to a compressor;
directing the environmentally-suitable chiller refrigerant from the compressor to a condenser;
directing the environmentally-suitable chiller refrigerant from the condenser to a purge, and removing one or more non-condensable gases from the chiller refrigerant;
directing the environmentally-suitable chiller refrigerant back to the condenser;
directing the environmentally-suitable chiller refrigerant from the condenser to an expansion device;
directing the environmentally-suitable chiller refrigerant from the expansion device to an evaporator; and
directing the environmentally-suitable chiller refrigerant from the evaporator back to the compressor,
wherein the compressor, the condenser, the expansion device, the evaporator, and the purge are fluidly connected to form a refrigeration circuit to conduct the refrigeration cycle, and
the environmentally-suitable chiller refrigerant has a 100 year direct global warming potential (GWP) of less than 150,
wherein the environmentally-suitable chiller refrigerant has a composition comprising:
at least one chemical of 1-chloro-3,3,3 trifluoropropene (E), 1-chloro-3,3,3 trifluoropropene (Z), 2-chloro-3,3,3 trifluoropropene, 1,1,dichloro-3,3,3 trifluoropropene, 1,3,3,3 tetrafluoropropene (E), 1,3,3,3 tetrafluoropropene (Z), 1,2 dichloro-3,3,3 trifluoropropene (E), 1,2 dichloro-3,3,3 trifluoropropene (Z), 1,1,3 trichloro-3,3,3 trifluoropropene, 1,2 dichloroethylene (E), 1,2 dichloroethylene (Z), 1,1 dichloroethylene, 1,1,1,4,4,4 hexafluorobutene (Z), 1,1,1,4,4,4 hexafluorobutene (E), Isopentane, and Pentane, and
wherein the amount of the chemical in the environmentally-suitable chiller refrigerant is in a range of about 40% to about 100% by weight.

## Patentansprüche

1. Kühlsystem, umfassend:
einen Kompressor (20, 620);
einen Kondensator (12, 612);
eine Expansionsvorrichtung (14, 614);
einen Verdampfer (16, 616);
wobei der Kompressor (20, 620), der Kondensator (12, 612), die Expansionsvorrichtung (14, 614) und der Verdampfer (16, 616) in Fluidverbindung stehen, um einen Kühlkreis zu bilden; und
eine Spülung (20, 620), die in Fluidverbindung mit dem Kondensator (12, 612) steht, um ein Kühlanlagen-Kältemittel aufzunehmen, das von dem Kondensator (12, 612) durch das Kühlsystem fließt, wobei die Spülung (20, 620) dafür gestaltet ist, nichtkondensierbare Gase aus dem Kühlanlagen-Kältemittel zu entfernen, und das Kühlanlagen-Kältemittel ein umweltverträgliches Kühlanlagen-Kältemittel enthält, das ein direktes 100-Jahre-Erderwärmungspotenzial (GWP) von weniger als 150 aufweist,
wobei das umweltverträgliche Kühlanlagen-Kältemittel eine Zusammensetzung aufweist, die umfasst:
wenigstens eine Chemikalie von 1-Chlor-3,3,3-trifluorpropen (E), 1-Chlor-3,3,3-trifluor-propen (Z), 2-Chlor-3,3,3-trifluorpropen, 1,1-Dichlor-3,3,3-trifluorpropen, 1,3,3,3-Tetrafluorpropen (E), 1,3,3,3-Tetrafluorpropen (Z), 1,2-Dichlor-3,3,3-trifluorpropen (E), 1,2-Dichlor-3,3,3-trifluorpropen (Z), 1,1,3-Trichlor-3,3,3-trifluorpropen, 1,2-Dichlorethylen (E), 1,2-Dichlorethylen (Z), 1,1-Dichlorethylen, 1,1,1,4,4,4-Hexafluorbuten (Z), 1,1,1,4,4,4-Hexafluorbuten (E), Isopentan und Pentan und
wobei die Menge der Chemikalie in dem umweltverträglichen Kühlanlagen-Kältemittel in einem Bereich von etwa 40 Gew-% bis etwa 100 Gew.-% liegt.

2. Kühlsystem gemäß Anspruch 1, wobei das Kühlanlagen-Kältemittel ferner wenigstens eines von einem Schmiermittel, einem Kompatibilisierungsmittel, einem Stabilisator, einem grenzflächenaktiven Mittel, einem Hemmer und einem Solubilisierungsmittel umfasst.

3. Kühlsystem gemäß Anspruch 1, wobei die Spülung ein Spül-Kältemittel verwendet, das fähig ist, eine vergleichsweise tiefere Verdampfungstemperatur als das umweltverträgliche Kühlanlagen-Kältemittel zu erzeugen.

4. System gemäß Anspruch 1, ferner umfassend einen Entferner (670a, 670b), der funktionsfähig mit der Spülung (620) verbunden ist, wobei der Entferner dafür gestaltet ist, ein oder mehrere kältemittelschädliche Gase aus dem Kühlanlagen-Kältemittel zu entfernen.

5. System gemäß Anspruch 4, wobei der Entferner einen Wäscher (800) umfasst.

6. System gemäß Anspruch 5, wobei der Entferner wenigstens eines von einem Trockenwäscher und einem Nasswäscher umfasst.

7. System gemäß Anspruch 4, wobei der Entferner ein oder mehrere Wäschermaterialien (830) umfasst, die mit den kältemittelschädlichen Gasen vergleichsweise mehr reaktiv sind als mit dem Kühlanlagen-Kältemittel.

8. System gemäß Anspruch 7, wobei die Wäschermaterialien wenigstens eines von:
einem Edelmetall, einem Natriumsulfit (Na₂SO₃)-Material, einem Hydrazin (N₂H₄) -Material, einem Chinonmaterial, einem Cobaltsalz, einem Lithiumsalz, einem sauerstoffreaktiven Material und aktiviertem Aluminiumoxid enthalten.

9. System gemäß Anspruch 4, wobei die kältemittelschädlichen Gase wenigstens eines von Sauerstoff, Ozon, Kohlendioxid, Kohlenmonoxid, einem Hydroxylrest, einem Chlorrest und einem Stickoxid enthalten.

10. System gemäß Anspruch 4, wobei der Einlass der Spülung (20, 620) in Fluidverbindung mit einer Zuführleitung (20a, 620a) steht und der Auslass der Spülung in Fluidverbindung mit einer Rückführleitung (20b, 620b) steht und der Entferner (670a, 607b) an wenigstens einem von der Zuführleitung (620a) und der Rückführleitung (620b) angeordnet ist.

11. Verfahren zur Durchführung eines Kühlzyklus, umfassend:
Leiten eines umweltverträglichen Kühlanlagen-Kältemittels zu einem Kompressor;
Leiten des umweltverträglichen Kühlanlagen-Kältemittels von dem Kompressor zu einem Kondensator;
Leiten des umweltverträglichen Kühlanlagen-Kältemittels von dem Kondensator zu einer Spülung und Entfernen eines oder mehrerer nichtkondensierbarer Gase aus dem Kühlanlagen-Kältemittel;
Leiten des umweltverträglichen Kühlanlagen-Kältemittels zurück zu dem Kondensator;
Leiten des umweltverträglichen Kühlanlagen-Kältemittels von dem Kondensator zu einer Expansionsvorrichtung;
Leiten des umweltverträglichen Kühlanlagen-Kältemittels von der Expansionsvorrichtung zu einem Verdampfer; und
Leiten des umweltverträglichen Kühlanlagen-Kältemittels von dem Verdampfer zurück zu dem Kompressor,
wobei der Kompressor, der Kondensator, die Expansionsvorrichtung, der Verdampfer und die Spülung in Fluidverbindung stehen, um einen Kühlkreis zu bilden, um den Kühlzyklus durchzuführen; und
das umweltverträgliche Kühlanlagen-Kältemittel ein direktes 100-Jahre-Erderwärmungspotenzial (GWP) von weniger als 150 aufweist,
wobei das umweltverträgliche Kühlanlagen-Kältemittel eine Zusammensetzung aufweist, die umfasst:
wenigstens eine Chemikalie von 1-Chlor-3,3,3-trifluorpropen (E), 1-Chlor-3,3,3-trifluor-propen (Z), 2-Chlor-3,3,3-trifluorpropen, 1,1-Dichlor-3,3,3-trifluorpropen, 1,3,3,3-Tetrafluorpropen (E), 1,3,3,3-Tetrafluorpropen (Z), 1,2-Dichlor-3,3,3-trifluorpropen (E), 1,2-Dichlor-3,3,3-trifluorpropen (Z), 1,1,3-Trichlor-3,3,3-trifluorpropen, 1,2-Dichlorethylen (E), 1,2-Dichlorethylen (Z), 1,1-Dichlorethylen, 1,1,1,4,4,4-Hexafluorbuten (Z), 1,1,1,4,4,4-Hexafluorbuten (E), Isopentan und Pentan und
wobei die Menge der Chemikalie in dem umweltverträglichen Kühlanlagen-Kältemittel in einem Bereich von etwa 40 Gew-% bis etwa 100 Gew.-% liegt.

## Revendications

1. Système de réfrigération, comprenant :
un compresseur (20, 620) ;
un condenseur (12, 612) ;
un dispositif d'expansion (14, 614) ;
un évaporateur (16, 616) ;
le compresseur (20, 620), le condenseur (12, 612), le dispositif d'expansion (14, 614), et l'évaporateur (16, 616) étant en raccordement fluidique pour former un circuit de réfrigération ; et
une purge (20, 620) en raccordement fluidique avec le condenseur (12, 612) pour recevoir un fluide frigorigène de refroidisseur s'écoulant à travers le système de réfrigération depuis le condenseur (12, 612), la purge (20, 620) étant configurée pour éliminer les gaz non condensables du fluide frigorigène de refroidisseur, et
le fluide frigorigène de refroidisseur comprenant un fluide frigorigène de refroidisseur respectueux de l'environnement qui a un potentiel de réchauffement global (PRG) direct à 100 ans inférieur à 150,
dans lequel le fluide frigorigène de refroidisseur respectueux de l'environnement a une composition comprenant :
au moins un composé chimique parmi les 1-chloro-3,3,3-trifluoropropène (E), 1-chloro-3,3,3-trifluoropropène (Z), 2-chloro-3,3,3-trifluoropropène, 1,1-dichloro-3,3,3-trifluoropropène, 1,3,3,3-tétrafluoropropène (E), 1,3,3,3-tétrafluoropropène (Z), 1,2-dichloro-3,3,3-trifluoropropène (E), 1,2-dichloro-3,3,3-trifluoropropène (Z), 1,1,3-trichloro-3,3,3-trifluoropropène, 1,2-dichloroéthylène (E), 1,2-dichloroéthylène (Z), 1,1-dichloroéthylène, 1,1,1,4,4,4-hexafluorobutène (Z), 1,1,1,4,4,4-hexafluorobutène (E), isopentane et pentane, et
dans lequel la quantité du composé chimique dans le fluide frigorigène de refroidisseur respectueux de l'environnement est dans une plage d'environ 40 % à environ 100 % en poids.

2. Système de réfrigération selon la revendication 1, dans lequel le fluide frigorigène de refroidisseur comprend en outre au moins l'un parmi un lubrifiant, un agent de compatibilité, un stabilisant, un tensioactif, un inhibiteur, et un agent solubilisant.

3. Système de réfrigération selon la revendication 1, dans lequel la purge utilise un fluide frigorigène de purge capable de générer une température d'évaporation relativement plus basse que le fluide frigorigène de refroidisseur respectueux de l'environnement.

4. Système selon la revendication 1, comprenant en outre un éliminateur (670a, 670b) fonctionnellement raccordé à la purge (620), l'éliminateur étant configuré pour éliminer un ou plusieurs gaz nocifs de fluide frigorigène du fluide frigorigène de refroidisseur.

5. Système selon la revendication 4, dans lequel l'éliminateur comprend un épurateur (800).

6. Système selon la revendication 5, dans lequel l'éliminateur comprend au moins l'un parmi un épurateur sec et un épurateur humide.

7. Système selon la revendication 4, dans lequel l'éliminateur comprend un ou plusieurs matériaux épurateurs (830) qui sont relativement plus réactifs avec les gaz nocifs de fluide frigorigène qu'avec le fluide frigorigène de refroidisseur.

8. Système selon la revendication 7, dans lequel les matériaux épurateurs comprennent au moins l'un parmi :
un métal noble, un matériau de sulfite de sodium (Na₂SO₃), un matériau d'hydrazine (N₂H₄), un matériau de quinone, un sel de cobalt, un sel de lithium, un métal réactif avec l'oxygène et un oxyde d'aluminium activé.

9. Système selon la revendication 4, dans lequel les gaz nocifs de fluide frigorigène comprennent au moins l'un parmi l'oxygène, l'ozone, le dioxyde de carbone, le monoxyde de carbone, un radical hydroxyle, un radical chlore et un oxyde nitreux.

10. Système selon la revendication 4, dans lequel l'entrée de la purge (20, 620) est en raccordement fluidique avec une conduite de distribution (20a, 620a) et la sortie de la purge est en raccordement fluidique avec une conduite de retour (20b, 620b), et l'éliminateur (670a, 607b) est situé sur au moins l'un parmi la conduite de distribution (620a) et la conduite de retour (620b).

11. Procédé de conduite d'un cycle de réfrigération, comprenant :
le guidage d'un fluide frigorigène de refroidisseur respectueux de l'environnement vers un compresseur ;
le guidage du fluide frigorigène de refroidisseur respectueux de l'environnement depuis le compresseur vers un condenseur ;
le guidage du fluide frigorigène de refroidisseur respectueux de l'environnement depuis le condenseur vers une purge, et l'élimination d'un ou de plusieurs gaz non condensables à partir du fluide frigorigène de refroidisseur ;
le guidage du fluide frigorigène de refroidisseur respectueux de l'environnement pour le faire revenir vers le condenseur ;
le guidage du fluide frigorigène de refroidisseur respectueux de l'environnement depuis le condenseur vers un dispositif d'expansion ;
le guidage du fluide frigorigène de refroidisseur respectueux de l'environnement depuis le dispositif d'expansion vers un évaporateur ; et
le guidage du fluide frigorigène de refroidisseur respectueux de l'environnement depuis l'évaporateur pour le faire revenir vers le compresseur,
dans lequel le compresseur, le condenseur, le dispositif d'expansion, l'évaporateur, et la purge sont en raccordement fluidique pour former un circuit de réfrigération pour conduire le cycle de réfrigération, et
le fluide frigorigène de refroidisseur respectueux de l'environnement a un potentiel de réchauffement global (PRG) direct à 100 ans inférieur à 150,
dans lequel le fluide frigorigène de refroidisseur respectueux de l'environnement a une composition comprenant :
au moins un composé chimique parmi les 1-chloro-3,3,3-trifluoropropène (E), 1-chloro-3,3,3-trifluoropropène (Z), 2-chloro-3,3,3-trifluoropropène, 1,1,dichloro-3,3,3-trifluoropropène, 1,3,3,3-tétrafluoropropène (E), 1,3,3,3-tétrafluoropropène (Z), 1,2-dichloro-3,3,3-trifluoropropène (E), 1,2-dichloro-3,3,3-trifluoropropène (Z), 1,1,3-trichloro-3,3,3-trifluoropropène, 1,2-dichloroéthylène (E), 1,2-dichloroéthylène (Z), 1,1-dichloroéthylène, 1,1,1,4,4,4-hexafluorobutène (Z), 1,1,1,4,4,4-hexafluorobutène (E), isopentane et pentane, et
dans lequel la quantité du composé chimique dans le fluide frigorigène de refroidisseur respectueux de l'environnement est dans une plage d'environ 40 % à environ 100 % en poids.
